# EUROPEAN PATENT SPECIFICATION

(11) **EP 4 184 864 B1**
(45) Date of publication and mention of the grant of the patent: **24.12.2025**
(21) Application number: 21250009.4
(22) Date of filing: 23.11.2021
(51) Int. Cl.: H04L 9/40

(54) **ACCESS MANAGEMENT SYSTEM AND ASSOCIATED COMPUTER-IMPLEMENTED METHODS**
ZUGANGSVERWALTUNGSSYSTEM UND ZUGEHÖRIGE COMPUTERIMPLEMENTIERTE VERFAHREN
SYSTÈME DE GESTION D'ACCÈS ET PROCÉDÉS ASSOCIÉS MIS EN UVRE PAR ORDINATEUR

(43) Date of publication of application: 24.05.2023
(73) Proprietor: Nagravision Sàrl, 1033 Cheseaux-sur-Lausanne (CH)
(72) Inventor: GAGLIADONI, Tommaso, Cheseaux-sur-Lausanne 1033 (CH)
(74) Representative: Parker, Andrew James

(56) References cited:
- US-A1- 2006 248 600
- US-A1- 2019 342 085

## Description

### TECHNICAL FIELD OF THE INVENTION

The present invention relates to an access management system for controlling access to an electronic resource. Associated computer-implemented methods are also provided.

### BACKGROUND TO THE INVENTION

When a user wishes to register for a new service, such as an internet forum, a website, or a new product, the service provider invariably requires that the user registers a new account. Generally, this requires the user to provide a personal (valid) email address, a suitable username, and a password. Often, the user must also receive an authentication code via email. The user must then remember the username and password for subsequent access. Often, the user also needs to provide a valid mobile phone number, credit card details, and even a copy of their ID or proof of address. This is cumbersome for the user and the service provider, and is requires that the user expose their personal data. This is undesirable for privacy regulations, and also represents a liability for the service provider.

Alternatives have been provided to this "traditional" approach. Universal logins, such as the familiar "Login with Facebook" or "Login with Google" are offered by many websites nowadays. This partially solves the problem by invoking a trusted third party, and these systems are often designed with advanced privacy-preserving techniques (e.g. zero-knowledge, remote attestation). However, the systems still rely on a central authority to work, which comes with its own disadvantages. For example, if the Google authenticator portal is offline, a user cannot access the service in this manner even if the service is available. Also, this approach enforces a systemic reliance on these third parties, which then become a single point of failure, often for critical services and without proper regulatory oversight. Most importantly, these alternative systems:
- do not *remove* the requirement for a cumbersome registration process, they just limit it to a single initial setup;
- do not remove the liability for these central authorities, who then end up collecting a large amount of personal data and therefore expose themselves to targeted attacks; and
- do not remove the risk for users, who still have to share personal information with third parties, and with no other guarantees and safeguards than those merely given by limited and hard-to-enforce legal devices such as GDPR.

These systems fail to address the question of why the service provider should always be in control of the identity of the user requesting a service. This is not the case for most everyday real-world services: we do not have to provide ID when buying food at a supermarket; when buying alcohol, we only have to provide ID as a proof of age - our other data is irrelevant, and is not stored. Generally, a service provider cares only about whether a user is paying for the service, and their personal information is incidental.

The present invention aims to address these issues.

Furthermore, it is well-known to users and service providers alike that the value of a certain service can fluctuate over time as a consequence of supply vs. demand. However, it is highly non-trivial for the service provider to adjust pricing in real time while giving reliable guarantees of service availability to paying customers. For example, if a customer pays upfront a yearly membership fee for accessing a certain resource, but then the price of the resource increases due to market fluctuations, the service provider is at a loss. Likewise, if the price drops, the customer is at a loss. One possible solution that has been adopted for certain services is that of using a prepaid account: the customer deposits a certain amount of funds, and those funds are depleted over time at a rate which is dependent on the market value of the resource. However, unlike normal deposits, for prepaid bill accounting systems, there is no way for a user to recoup leftover funds if they decide to cancel the subscription before it ends.

Certain aspects of the present invention aim to address this issue as well.

US2006/248600 relates to a process for preventing fraudulent internet account access and relies on an authorized list which comprises pre-authorized network addresses. US 2019/342085 is directed to the tracking of products and product information during a supply chain.

### SUMMARY OF THE INVENTION

At a high level, the present invention addresses the problems outlined above by providing systems and methods in which, when a request is validated, a user's public key (or information identifying the public key) is placed on a list of authorized public keys, wherein users whose public keys are on the list are permitted to access the an electronic resource. Further aspects of the invention provide systems and methods which are modified to enable an auction capability which addresses the issues associated with the variations in cost of a resource. These are discussed later in this application.

An access management system for controlling access to an electronic resource, the electronic resource accessible at a resource address, and provided by a service provider having associated therewith an electronic provider address, the system comprising: a request management module, configured to determine whether a registration request received at the electronic provider address is a valid registration request, wherein: the registration request includes a public key or data identifying the public key, associated with a client device or user thereof from which the registration request is received; an authorized client management module configured to add the public key of the user, or data identifying the public key, to an authorized list, if the request management module determines that the registration request is a valid registration request, wherein: when a public key or data identifying the public key of the client device is on the authorized list, the client device or user thereof is permitted to access the electronic resource. Herein, the public key referred to above may be a public verification key which is used to identify the user through validation of a signature generated using a private signature key of the user (or client device). In some cases, the public key referred to here may be a public encryption key which is used to encrypt a session key (discussed in detail later on in this application). This is discussed in more detail later on.

Throughout this application, where we refer to a "client device", this should be understood to mean "a client device or a user thereof". Similarly, where we refer to a "public key ID", this should be understood to mean "a public key or data identifying the public key". These abbreviations are used to improve the clarity and conciseness of the follow disclosure.

In this way, no personal information related to a user of a client device, who wishes to access the electronic resource, is ever transmitted or stored. This enables a user to access an electronic resource, such as an online resource, without risk of their personal data being obtained by malicious actors.

In some cases, the electronic provider address may be a blockchain address. Specifically, the electronic provider address may be an address of a blockchain wallet, to which funds may be transferred, which is associated with the service provider. In particularly preferred case, the transaction would me made using a cryptocurrency with anonymity features, further adding to the security provided by the invention. An example of a cryptocurrency which may be used in implementations of the present invention is Monero. In some cases, particularly those cases which involve transferring funds using a blockchain, the registration request preferably includes a signature which is generated using a private signature key associated with the client device from which the registration request is received. This may be done so that the request management module or management software of the blockchain wallet is able to confirm that the user who sends the registration request to the electronic provider address is indeed who they claim to be. In these cases where the registration request is in the form of a blockchain transaction, the public verification key is preferably included in the request (i.e. the public verification key which is complementary to the private key which is used to generate the signature). It is this public verification key (or a related ID thereof) which may be added to the authorized list, if it is determined that the registration request is a valid request. This is convenient, because it means that unique identification can be stripped straight from the registration request when it is determined that it is valid, without requiring any personal information about the user.

The user's personal information therefore remains entirely secure.

In some cases, the registration request may further include a public encryption key associated with the client device. In these cases, when data is encrypted using the public encryption key associated with the client device, it may be decrypted using a private decryption key to which only the client device in question has access.

We now consider how the validation process takes place. Specifically, the request management module may be configured to determine whether the registration request received at the electronic provider address meets a validation criterion, wherein: if the request management module determines that the request received at the electronic provider address meets the validation criterion, it is determined that the request is a valid request; and if the request management module determines that the request received at the electronic provider address does not meet the validation criterion, it is determined that the request is not a valid request. In some cases, the request management system may be configured to determine whether a quantity associated with the registration request received at the electronic provider address is greater than or equal to a predetermined value, wherein: if the request management system determines that the quantity associated with the registration request received at the electronic provider address is greater than or equal to the predetermined value, it is determined that the registration request is a valid registration request; and if the request management system determines that the quantity associated with the registration request received at the electronic provider address is less than the predetermined value, it is determined that the registration request is not a valid registration request. In these cases, the validation criterion is that the quantity associated with the registration request is greater than or equal to the predetermined value. Systems according to this example are useful in enabling commercial transactions, e.g. via a blockchain, as discussed above.

The access management system may not only be configured to process a single registration request. Specifically, the request management module may be configured to determine whether each request of a plurality of registration requests received at the electronic provider address is a valid registration request, each of the registration requests including a respective public key ID associated with the client device from which the registration request is received. Furthermore, the authorized client management module may be configured to add the respective public key ID of the client device associated with each of the valid requests to the authorized list. In some cases if a registration request of a client device is not granted, then that client device may be placed on a waiting list (e.g. in the event that a threshold requirement to be placed on the authorized list is lowered). In this way, the access management system is able to deal with a plurality of registration requests. The access management system may be configured to deal with the requests one at a time, or simultaneously in a single parallel operation.

The above disclosure relates to a registration process, whereby a client device is essentially registered or subscribed to an electronic resource. Examples of resources include streaming services such as Netflix or Spotify, online games such as World of Warcraft and Fortnite, online newspapers, and any other online content which is associated with a subscription.

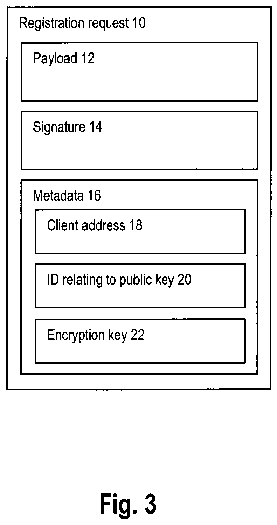

Next, we consider how the client device actually comes to access the electronic resource, using an authorization module. Specifically, the access management system may further comprise an authorization module, which is preferably equipped to deal with access requests from client devices. Herein, an access request, is a request actually to access the electronic resource, rather than just registering to be able to access the resource. The authorization module (or alternatively, the request management module) may be configured to receive an access request from a client device, the access request, as discussed, indicating that the client device would like to access the electronic resource which is stored at the resource address. Such an access request may include the public key ID associated with the client device from which the access request is received. In addition, the access request may further include a public encryption key associated with the client device. Including the encryption key in the access request is advantageous in some circumstances because it minimizes the amount of metadata which needs to be transmitted in the initial registration request. The structure of the registration request is explained in more detail later on in the application with reference to Fig. 3, which should further clarify this advantage. In response to receiving the access request from the client device, the authorization module may be configured to determine whether the public key ID which is included in the access request is included in the authorized list. In other words, the authorization module verifies whether the sender of the access request is actually registered to access the electronic resource. In those cases where the authorization module determines that the public key ID is included in the authorized list, the authorization module is subsequently configured to grant the client device access to the electronic resource.

Access to the electronic resource is preferably granted by availing the client device of a session key which may be used to access the electronic resource. Of course, it is desirable not simply freely to broadcast the session key, in case such a signal is intercepted. Accordingly, the authorization module may be configured to grant the client device access to the electronic resource by encrypting a session key with a public encryption key associated with the client device, to generate an encrypted session key, and sending the encrypted session key to the client device, the encrypted session key being decryptable by a user using a private decryption key which is complementary to the public encryption key, and the decrypted session key being usable to access the electronic resource at the resource address. It will be noted that the encryption key may be retrievable from either the access request or the original registration request, in which case it is preferably stored to a memory of the access management system for later retrieval.

The session key may be a one-use session key, allowing the user to access the electronic resource a single time. For example, after the session key is used once, it may expire. In some cases in order to further heighten security, and also for increased control as to who is able to access the electronic resource, the session key may be a rotating session key. In other words, the session key may be updated on a regular (preferably periodic) basis. Specifically, the session key may be a rotating session key which changes to a new session key after a predetermined period of time; and wherein, when the session key changes, the authorization module is configured to encrypt the new session key with the encryption key of each client device whose public key ID is included in the authorized list in order to generate a new encrypted session key, and to send the new encrypted session key to the or each client device.

In certain cases, the validation criterion which determines which subset of client devices who have made registration requests are placed on the authorized list may be variable. Specifically, the request management module may be configured to change the validation criterion. Such a change may result in certain client devices (or specifically, their registration request) now meeting the criterion, when they didn't before, or certain client devices whose registration requests previously met the criterion no longer meeting the criterion. After the validation criterion has been changed, the request management module may be configured to determine whether the registration requests of the client devices whose public key IDs are included in the authorized list meet the updated validation criterion, and to identify those which do not, i.e. the no-longer valid registration requests. The request management module may then be configured to generate instructions configured to cause the authorized client management module to remove the public key IDs associated with the client devices whose registration requests are no longer valid from the authorized list. On the other hand, the request management module may also be configured to determine whether the registration request of client devices who have been placed in the waiting list (see earlier) meet the updated validation criterion. For those that do, the request management module may be configured to generate instructions configured to cause the authorized client management module to add the public key IDs associated with those client devices onto authorized list. In this manner, the present invention provides an access management system which is able to dynamically manage the client devices which are able to access a specific electronic resource while not requiring that individuals need to submit any personal information at all, nor to register with the service provider itself.

A second aspect of the invention provides a computer-implemented method of controlling access to an electronic resource, the electronic resource accessible at a resource address, and provided by a service provider having associated therewith an electronic provider address, the method comprising: determining whether a registration request received at the electronic provider address is a valid registration request, the request including a public key ID associated with a client device from which the registration request is received; if it is determined that the registration request is a valid registration request, adding the public key ID associated with the client device to an authorized list, wherein when a public key ID of the user is on the authorized list, the client device is permitted to access the electronic resource. The optional features set out above, with reference to the first aspect of the invention, also apply equally well to the second aspect of the invention.

A third aspect of the invention which is similar to the first addresses the situation in which a plurality of registration requests is received, and then a decision regarding the results of the registration requests is made "in bulk". As we demonstrate, access management systems of the third aspect of the invention may be used to implement an auction function. Specifically, a third aspect of the invention provides: an access management system for controlling access to an electronic resource, the electronic resource available at a resource address, and provided by a service provider having associated therewith an electronic provider address, the system comprising: a request management module configured to process a plurality of registration requests received at the electronic provider address, each of the registration requests including a respective public key ID associated with the client device from which the request is received, wherein processing the plurality of registration requests comprises: selecting only those registration requests of the plurality of requests which meet a predetermined validation criterion; and/or ranking the registration requests based on ranking data contained in the registration request, and selecting one or more of the registration requests based on a selection criterion; an authorized user management module configured to add the public key IDs associated with the client devices from which the selected registration requests were received to an authorized list, wherein: when a public key ID of a client device is on the authorized list, that client device is able to access the electronic resource. It will be noted that the optional features set out previously in this application in respect of the first aspect of the invention apply equally well to this third aspect of the invention, unless clearly incompatible, or where context dictates otherwise. In particular, the operation of the request management module (specifically with regard to determining how a validation criterion is met, and the authorization module may be as set out previously.

In some cases, the request management module, or other component, may be configured to change the validation criterion, the selection criterion, and/or the ranking data. Such a change may result in certain client devices (or specifically, their registration request) now meeting a criterion, when they didn't before, or certain client devices whose registration requests previously met a criterion no longer meeting the criterion. After the validation criterion has been changed, the request management module may be configured to determine whether the registration requests of the client devices whose public key IDs are included in the authorized list meet the updated criteria, and to identify those which do not, i.e. the no-longer valid registration requests. The request management module may then be configured to generate instructions configured to cause the authorized client management module to remove the public key IDs associated with the client devices whose registration requests are no longer valid from the authorized list. On the other hand, the request management module may also be configured to determine whether the registration request of client devices who have been placed in the waiting list (see earlier) meet the updated criterion. For those that do, the request management module may be configured to generate instructions configured to cause the authorized client management module to add the public key IDs associated with those client devices onto authorized list. In this manner, the present invention provides an access management system which is able to dynamically manage the client devices which are able to access a specific electronic resource while not requiring that individuals need to submit any personal information at all, nor to register with the service provider itself.

A fourth aspect of the invention provides a computer-implemented method for controlling access to an electronic resource, the electronic resource available at a resource address, and provided by a service provider having associated therewith an electronic provider address, the method comprising: processing a plurality of registration requests received at the electronic provider address, each of the registration requests including a respective public key ID associated with the client device from which the registration request is received, wherein processing the plurality of registration requests comprises: selecting only those registration requests of the plurality of registration requests which meet a predetermined validation criterion; and/or ranking the registration requests based on ranking data contained in the registration request, and selecting one or more of the registration requests based on a selection criterion; adding the public key IDs associated with the client devices from whom the selected registration requests were received to an authorized list, wherein when a public key ID of a client device is on the authorized list, that client device is able to access the electronic resource. Optional features set out above in respect of the first and third aspects of the invention apply equally well to the fourth aspect of the invention except where they are clearly incompatible, or context dictates otherwise.

Additional aspects of the invention provide: a computer program (or computer program product) comprising instructions which, when the program is executed by a computer, cause the computer to carry out the method of the second and/or fourth aspect of the invention; a computer-readable medium having stored thereon the computer program (or computer program product) of the previous aspect of the invention.

The invention includes the combination of the aspects and preferred features described except where such a combination is clearly impermissible or expressly avoided.

### BRIEF DESCRIPTION OF THE DRAWINGS

Embodiments of the present invention will now be described with reference to the accompanying drawings, in which:
- Fig. 1 shows a high-level system diagram including an access management system according to a first aspect or third aspect of the present invention.
- Fig. 2 is a flowchart illustrating a registration process according to the first and second aspects of the invention.
- Fig. 3 is an example of a registration request which may be received by the access management system.
- Fig. 4 is a flowchart illustrating some of the functions of the request management module.
- Fig. 5A is a flowchart illustrating some of the functions performed by the authorization module.
- Fig. 5B is an example of an access request which may be received by the access management system.
- Fig. 6 is a flowchart illustrating how access is granted to the electronic resource.
- Fig. 7 is a flowchart illustrating the process by which the session key is changed, and the authorized client devices updated.
- Fig. 8 is a flowchart illustrating a process in which the validation criterion is changed, and the public key IDs of some client devices are removed from the authorized list.
- Fig. 9 is a flowchart illustrating a registration process according to the third and fourth aspects of the invention.
- Fig. 10 is a flowchart illustrating a process in which the validation criterion/selection criterion/ranking data are changed.

### DETAILED DESCRIPTION OF THE DRAWINGS

Aspects and embodiments of the present invention will now be discussed with reference to the accompanying figures. Further aspects and embodiments will be apparent to those skilled in the art.

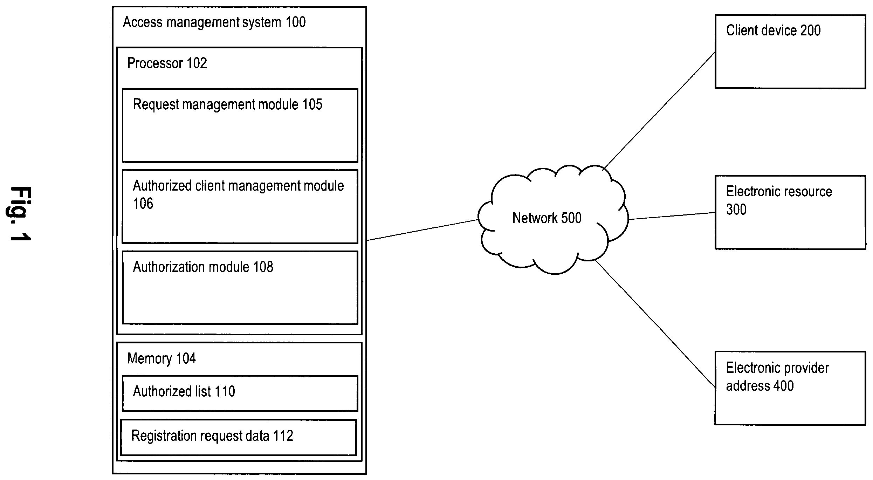

In at least one aspect, the present invention relates to an access management system which is able to ensure that user's can access an electronic resource without the requirement of supplying personal data to the service provider. Fig. 1 shows a high-level system diagram of an overall system which illustrates the functionality of the present invention. The system includes an access management system 100, a client device 200, an electronic resource 300 (located at an electronic resource address), and an electronic provider address 400. The client device 200 (or, depending on context, a user of the client device 200) may wish to access an electronic resource 300, which is located at an electronic resource address. In order to do so, the client device 200 may first send a registration request to either the access management system 100 or the electronic provider request 400. Based on the outcome of that registration request, the client device 200 may be placed on an authorized list 112. The client device 200 may then send an access request to the access management system 100. These processes are explained in more detail throughout this application. The access management system 100, client device 200, electronic resource 300, and electronic provider address 400 may be connected via a network 500. The network 500 may be a wired network, but in preferred cases, the network 500 is a wireless network, such as a Wi-Fi network, a cellular network, or most preferably, the internet. It should be noted that although Fig. 1 shows all of the components being connected via network 500, in some cases, they may be connected by more than network (e.g. each pair of components may be connected via a separate network).

Before discussing its operation, we describe the structure of the access management system 100 in more detail. The access management system 100 may include a processor 102 and a memory 104. The processor 102 may include a request management module 105, an authorized client management module 106, and an authorization module 108. The memory 104 may include an authorized list 110, and registration data 112.

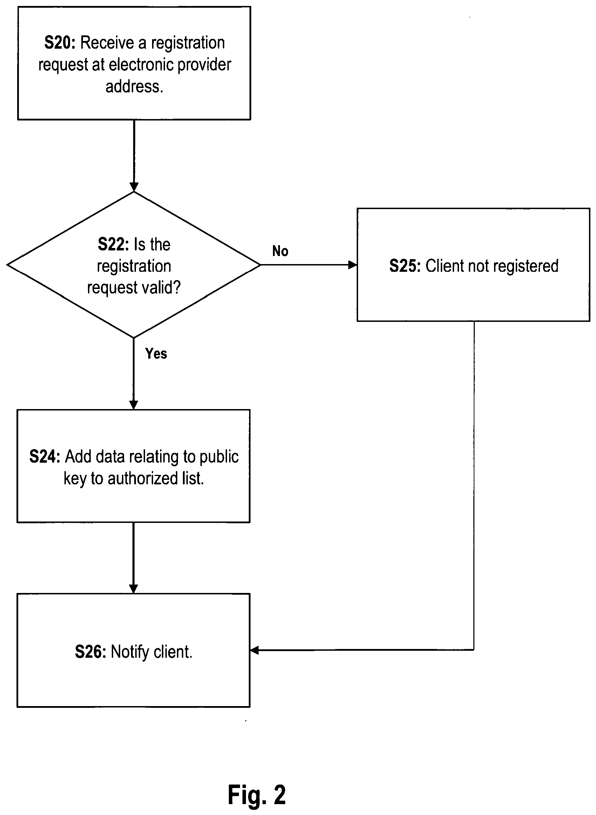

Fig. 2 is a flowchart illustrating, at a high-level, a registration process according to the first aspect of the invention. In a first step S20, a registration request 30 from client device 200 may be received at the electronic provider address 300. An example of a registration request 10 is shown in Fig. 3. Registration request 10 may include a payload 12, a signature 14, and metadata 16. The metadata 16 may include a client address 18, which indicates to the request management module 105 where e.g. notifications and other data intended for a given client device 200 should be sent. The metadata may further include an ID relating to the public key 20. This is an important feature, since it is the ID relating to the public key 20 which is stored on the authorized list 110 in order to confirm that the client device 200 associated with that ID is permitted to access the electronic resource 300. In alternative cases, instead of the metadata 16 of the registration request 10 including an ID related to the public key of the client device 200, it may include the public key itself - both approaches are valid, and throughout this application, where we refer to an ID relating to the public key 20, a public key ID, or the like, it should be understood that the term is interchangeable with just the public key, unless context dictates otherwise. Finally, the metadata 16 may include an encryption key 22. In cases where the registration request 10 includes an encryption key 22, it is preferably stored e.g. by the registration request module 105 in the registration data 112 of the memory 104 of the access management system 100 in association with the ID related to the public key 20.

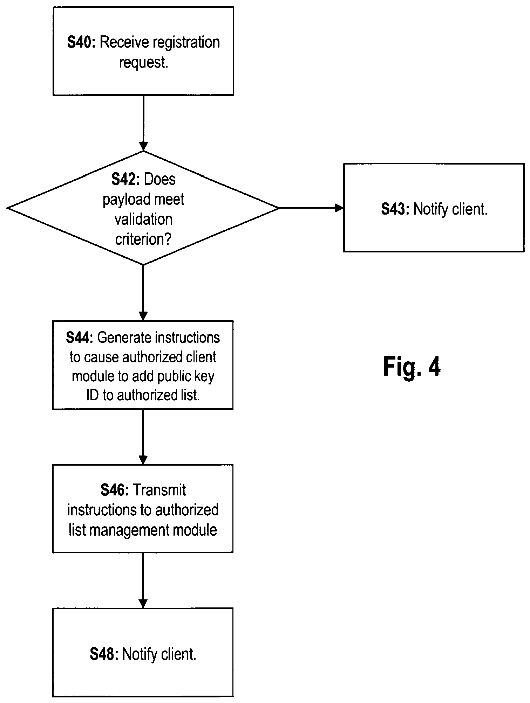

The signature 14 is preferably generated using a private signature key associated with the client device 200 or a user thereof. This means that the signature may be verified using a public verification key which is sent to e.g. the electronic provider address 400 or e.g. the request management module 105 of the access management system 100, in the registration request 10. The nature of the payload 12 is discussed shortly, with reference to Fig. 4.

Upon receive the registration request, the request management module 105 may determine whether the registration request 10 is a valid request, in decision step S22. In the event that the registration request 10 is valid, the authorized client management module 106 may then add the public key 20 associated with the client device 200 from which the registration request 10 was received to the authorized list 110. The authorized list 110 preferably includes a list of client devices 200 who are permitted to access the electronic resource 300 based on the results of the determination in step S22. If it is determined in step S22 that the registration request 10 is not a valid request, the client device 200 from which the registration request 10 was received may not be registered, i.e. the public key ID will not be added to the authorized list 110. Then, in both cases (i.e. registered and not registered), the user may be notified of the result in step S26, at the client address 18 in the metadata 16 of the registration request 10.

Fig. 4 shows more detail of the process performed by the request management module 105. In step S40, the registration request 10 may be received, e.g. at the electronic provider address 400 or the request management module 105 itself. Then, in step S42, the request management module 105 may determine whether the payload 12 of the registration request 10 meets some predetermined validation criterion. In some implementations of this invention, the electronic provider address 400 may be the address of a blockchain wallet associated with the electronic service provider. In such cases, the payload 12 may indicate the amount of funds to be transferred from the client device 200 to the blockchain wallet of the service provider. In such cases, the validation criterion may include a cost associated with access to the electronic resource 300, and the request management module 105 may be configured to compare the amount of funds indicated in the payload 12 with the cost. If it is determined that the payload 12 does not match the validation criterion, the client device 200 from which the registration request 10 was received may not be registered on the system, and they may be notified accordingly in step S43. Conversely, if it is determined that the payload 12 does meet the validation criterion, then the requestion management module 105 may, in step S44, generate instructions which cause the authorized client module 106 to add the public key ID 20 from the registration request to the authorized list 110 in memory 104, and transmit the instructions accordingly in step S46. The request management module 105 may then notify the user accordingly. In some cases, the request management module 105, or the processor 102 of the access management module 100 more generally may include a notification module (not shown) which may be configured to generate and transmit notifications.

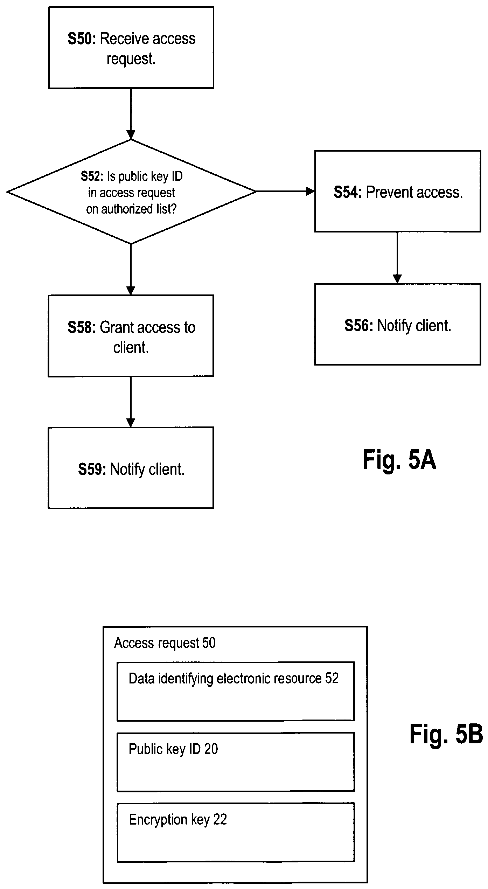

The processes outlined above relate to the initial registration of a client device 200 with the electronic service provider via the access management module 100. Once a client device 200 is registered, the user thereof (or, for that matter, a user who is not registered) may then wish to access the electronic resource 300. In order to do so, an access request is generated and sent to the access management system 100. Fig. 5A shows an example of a process which may be performed to process the access request. In step S50, the access management system 100, preferably the authorization module 108 thereof, may receive the access request 20. Fig. 5B shows an example of an access request 50, which may include data 52 identifying the electronic resource 300, a public key ID 20 associated with the client device 200, and an encryption key 22 associated with the client device 200. In cases in which the encryption key 22 is included in the client device 200's original registration request 10, then it is not necessary for the access request 50 to include the encryption key 22. It should be noted that Fig. 5B is not exhaustive - the access request 50 may include other data as well. In step S52 of Fig. 5A, the authorization module 108 may determine whether the public key ID included in the access request 50 is present in the authorized list 110. If not, then access by the client device 200 to the electronic resource 300 is prevented in step S54, and in step S56 a notification is sent accordingly. If the public key ID 20 is included in the authorized list 110, then the authorization module 108 grants the client device 200 access to the electronic resource in step S58, and notifies them accordingly in step S59.

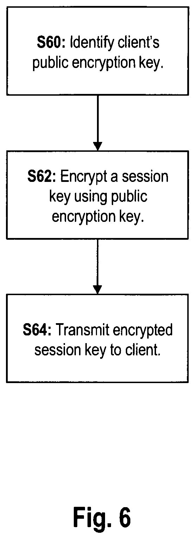

We now consider how the client device 200 maybe authorized to access the electronic resource 300, and how access is actually granted. An exemplary process is shown in Fig. 6. Essentially, when a client device 200 is granted access to the electronic resource 300, they are provided with a session key which gives them access to it. In step S60, the encryption key 22 associated with the client device 200 in question is identified. For example, if the encryption key 22 was initially delivered in the registration request 10, and stored in the registration request data 112, then the authorization module 108 may perform a lookup in the registration request data 112 to identify the encryption key 22 associated with the public key ID 20 which was present in the access request 50. Alternatively, in a simpler case, if the encryption key 22 formed part of the access request 50, then the encryption key 22 may simply be retrieved therefrom. Once the encryption key 22 has been identified, the authorization module 108 (or optionally an encryption module, not shown, thereof) may then encrypt the session key using the encryption key 22 in step S62. It should be noted, for completeness, that data which is encrypted using the encryption key 22 is decryptable by a private decryption key which is possessed only by the client device 200, in order to ensure that only that client device 200 is able to access the session key which is encrypted using their own (public) encryption key 22. Once the session key has been encrypted, the encrypted session key may then, in step S64, be transmitted to the client device 200, at which point the client device 200 may decrypt the session key, and use the session key to access the electronic resource 300. Thus, access is granted to the electronic resource 300. In some cases, as discussed elsewhere, rather than generating encrypted session keys using the respective encryption key 22 of each client device 200, a broadcast encryption scheme may be used.

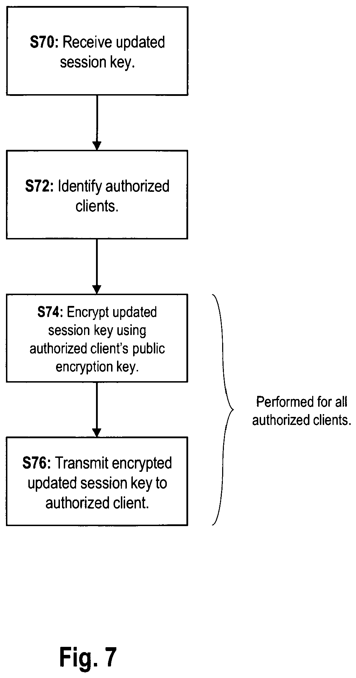

For added security, the session key may change on a regular, preferably periodic basis. The session key may change every minute, or hourly, or may change a plurality of times per day. It may change daily, may change every 2, 3, 4, 5, or 6 days. The session key may change weekly, or monthly. The frequency with which the session key changes is preferably based on the intended application. Of course, if the session key changes, then it is necessary to keep the registered client devices 200 updated as well, in order to ensure that they remain able to access the electronic resource. This process is illustrated in Fig. 7. In a first step, the authorization module 108 may receive the updated session key. Alternatively, the authorization module 108 may generate the updated session key itself. The process by which the session key is generated is preferably random. Then in step S72, the authorization module 108 may identify all authorized client devices 200, i.e. those client devices 200 whose public key ID 20 is present on the authorized list 110. Once these authorized client devices 200 have been identified, the authorization module 108, for each authorized client device 200, may encrypt the updated session key in step S74, using the client device's encryption key 22 (this may be obtained as outlined in the previous paragraph).

Finally, in step S76, the encrypted updated session key may be transmitted to the authorized client device 200. In some cases, as discussed elsewhere, rather than generating encrypted updated session keys using the respective encryption key 22 of each authorized client device 200, a broadcast encryption scheme may be used.

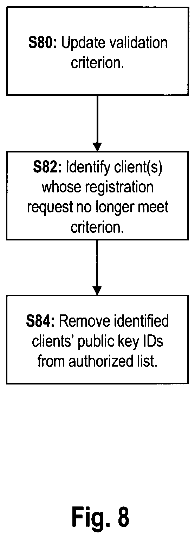

In some cases, it may be desirable to change the validation criterion. For example, in a commercial setting, this may be done in order to alter the price of accessing the electronic resource. The present invention provides a means of doing so. Fig. 8 shows an outline of a process by which the authorized list 110 can be updated based on a change in a validation criterion. In a first step S80, the validation criterion may be updated, e.g. by the request management module 105. This may correspond to an increase in the price of the electronic resource 300 provided. Then, in step S82, those client devices 200 the content of whose registration requests 10 no longer meet the validation criteria are identified. This may be achieved, for example, by the registration management module 105 re-evaluating all of the registration requests 10 (preferably the payloads 12 thereof), which may be stored in e.g. the registration request data 112 in association with the public key ID. Having identified the public key IDs 20 of the no-longer-permitted client devices 200, the authorized client management module 106 may then remove these public key IDs 20 from the authorized list 110. How, then, do these client devices 200 actually lose access to the electronic resource 300? In some cases, for example, the client device 200 may send an access request 50, which will then be denied by the authorization module 108 because the public key ID is no longer on the authorized list. Alternatively, in cases where the session key changes, the client device 200 will not be sent an updated session key because they are only sent to client devices 200 on the authorized list 110.

The above disclosure relates to the first aspect of the invention, which focuses on registration and authorization aspects of the access management system 100. The final feature of the invention, described in the preceding paragraph, relates to changing a validation criterion, and in doing so, automatically changing which client devices 200 are able to access an electronic resource 300. A further aspect of the invention provides for a process in which rather than being decided on a one-by-one basis, an access management system 100 may receive a plurality of registration requests 10, but may only be able to accept a subset of these. The present invention thereby enables a kind of bidding, or auction functionality. It should be stressed here that the invention lies within the novel implementation of an auction process, rather than with the actual auction process itself.

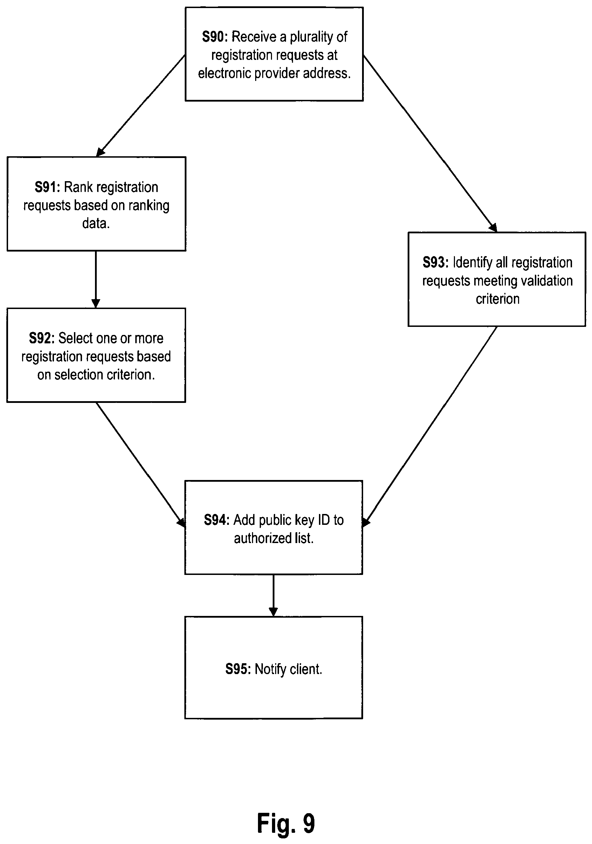

Fig. 9 shows a flowchart illustrating a registration process in which a subset of client devices 200 are selected from a plurality of registration requests 10. In a first step, S90 a plurality of registration requests 10 are received at the electronic provider address 400. These requests are not necessarily received at the same time, i.e. in one transmission. Rather, the plurality of registration requests 10 may comprise all of the registration requests 10 which are received before a predetermined deadline, or it may include a predetermined number of registration requests 10. There are two different approaches which may be taken in these cases in which a plurality of registration requests 10 are processed simultaneously. The first approach is shown in the left-hand branch of the flowchart in Fig. 9. Here, in step S91, the registration requests 10 are ranked based on some ranking data contained within the registration request 10, e.g. by the request management module 105, or a ranking module (not shown) thereof. The ranking data may be a value comprised in the registration request 10, e.g. the payload 12, thereof. Alternatively, the data could represent a time, a date, or a location - it is not important for the purposes of the invention. In some cases, after the ranking has taken place in step S91, all of the information apart from the public key IDs 20 may be discarded. Alternatively, the data (e.g. one or more of the payload 12, the client address 18, the public key ID 20, and encryption key 22) may be stored in the registration request data 112. In step S92, a subset of the registration requests 10 (or public key IDs 20 thereof) are selected based on some selection criterion, by the request management module 105, or a selection module (not shown) thereof. This selection criterion may specify how many of the requests 10 to select (e.g. the top 10, the top 100), a minimum or maximum value of a data item in a payload (e.g. all registration requests 10 with a payload value of 10 or more, or a payload value of no more than 100). Whatever the selection criterion, the outcome is the same: a subset of the registration requests 10 which have been ranked, and meet some selection criterion. In an alternative, though similar, case, shown in the right-hand branch of Fig. 9, the request management module 105 may identify a subset of the received registration requests 10 which meet a validation criterion. This process may be done in the same way as set out in step S42 of Fig. 4, explained earlier in this application. In one non-limiting example, the electronic provider address 400 may be a blockchain wallet. In that case, this process may be used only to select the subset of client devices 200 which have submitted a sufficiently high bid, or have submitted one of the top N bids. After the appropriate subset has been selected in either step S92 or step S93, in step S94, the public key IDs 20 associated with the successful client devices 200 (i.e. those which have been selected in the previous steps) are added by the authorized client management module 106 to the authorized list 112. The client devices 200 may then be notified in step S95. In the context of users bidding for a service, it is feasible that later bidders may come along and submit a bid which is higher than e.g. the lowest bid which has already been obtained. As a result, the later bidder should be able to overtake the lowest registered bidder in the ranking. Accordingly, the process shown in Fig. 9 may be repeated periodically, in order to ensure that the authorized list 110 of public key IDs 20 accurately reflects the subset of bidders who made the highest offers (or offers exceeding a threshold value). The repeats of the process are preferably based on any new registration requests 10 which are received, as well as the registration request data 112 stored in the memory 104 of the access management module 100.

In these cases, after the authorized list 110 has been generated, or updated, the process by which client devices 200 request access to the electronic resource 300 may be the same as shown in Figs. 5 and 6. The session key may be updated in the same way as shown in Fig. 7, too.

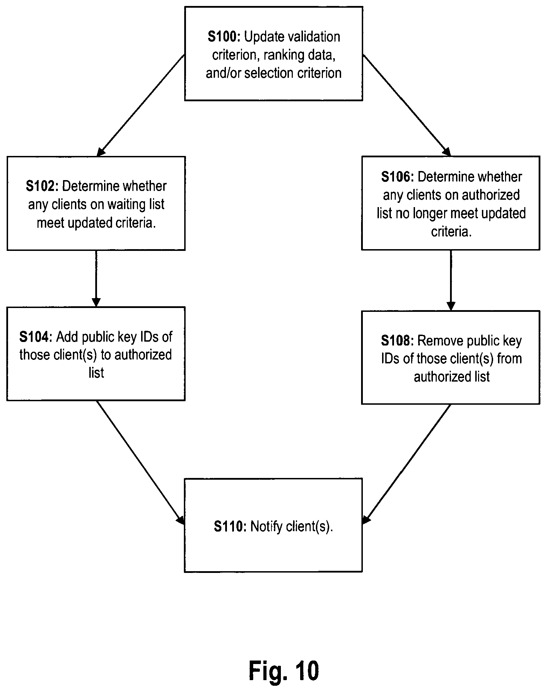

As well as updating the authorized list 110 based on new incoming registration requests 10, the validation criterion or selection criteria may also be updated, essentially changing the threshold based on which client devices 200 are authorized. In some cases during the registration process of Fig. 9, some of the client devices 200 will not make it onto the authorized list 110. In preferred cases, these unsuccessful registration requests 10 will be placed on a waiting list, which may be stored on the memory 104 of the access management system 100. The waiting list may take a similar form to the registration request data 112, except only containing data relating to client devices 200 whose associated public key IDs 20 are not present in the authorized list 110. In step S100 of Fig. 10, one or more of the validation criterion, the selection criterion and/or ranking data are updated e.g. by the request management module 105. Herein, when we refer to the "ranking data" being updated, this may refer to the data contained within the registration request which is actually considered during the ranking (e.g. changing to ranking by a time/date of a request, rather than a geographical location). There are two scenarios: in some cases, previously rejected registration requests 10 may now meet the criteria, and in other cases previously allowed registration requests 10 may no longer meet the criteria. These are considered on separate branches of Fig. 10. In step S102, the registration request module 105 (or another component) may determine whether there are any client devices 200 on the waiting list who meet the updated criteria. In cases where the criteria relates to e.g. a top N of registration requests 10, then it may be necessary to consider the client devices 200 on both the authorized list 110 and/or registration request data 112 as well as the waiting list, because if a new client device 200 is to meet the criteria, then it follows that one of the client devices 200 on the authorized list 110 no longer meets the criteria. Then, for all the client devices 200 whose registration requests 10 are now deemed to meet the updated criteria, their respective public key IDs 20 may be added to the authorized list 110 in step S104. On the other hand, in step S106, the registration module 105 (or another component) may determine whether there are any client devices 200 (or public key IDs 20 corresponding to client devices 200) which no longer meet the updated criteria. Again, in cases where the criteria relate to e.g. a top N of registration request 10, then it may be necessary to consider both the authorized list 110 and the waiting list. Then, in step S108, those determined client devices 200, more specifically the public key IDs associated therewith, may be removed from the authorized list 110. Subsequently, in step S110, all of the affected client devices 200 are informed of the changes.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. An access management system (100) for controlling access to an electronic resource (300), the electronic resource (300) accessible at a resource address, and provided by a service provider having associated therewith an electronic provider address (400), the access management system (100) comprising:
a request management module (105), configured to determine whether a registration request (10) received at the electronic provider address (400) is a valid registration request, wherein: the registration request (10) includes a public key or data (20) identifying the public key, associated with a client device (200) or user thereof from which the registration request (10) is received; and
an authorized client management module (106) configured to add the public key of the user, or data (20) identifying the public key, to an authorized list (110), if the request management module (105) determines that the registration request (10) is a valid registration request, wherein:
when a public key or data identifying the public key of the client device (200) is on the authorized list (110), the client device (200) or user thereof is permitted to access the electronic resource (300).

2. The access management system (100) according to claim 1, wherein:
the request management module (105) is configured to determine whether the registration request (10) received at the electronic provider address (400) meets a validation criterion, wherein:
if the request management module (105) determines that the registration request (10) received at the electronic provider address (400) meets the validation criterion, it is determined that the registration request (10) is a valid registration request; and
if the request management module (105) determines that the registration request (10) received at the electronic provider address (400) does not meet the validation criterion, it is determined that the registration request (10) is not a valid registration request.

3. The access management system (100) according claim 1 or claim 2, wherein:
the request management module (105) is configured to determine whether each registration request (10) of a plurality of registration requests (10) received at the electronic provider address (400) is a valid registration request, each of the registration requests (10) including a respective public key ID (20) associated with the client device (200) from which the registration request (10) is received; and
the authorized client management module (106) is configured to add the respective public key ID (20) of the client device (200) associated with each of the valid registration requests to the authorized list (110).

4. The access management system (100) according to any one of claims 1 to 3, wherein:
the access management system (100) further comprises an authorization module (108); and
the request management module (105) or the authorization module (108) is configured to receive an access request (50) from a client device (200), the access request (50) indicating that the client device would like to access the electronic resource (300) stored at the resource address and including the public key ID (20) associated with the client device (200) from which the access request (50) is received;
the authorization module (108) is configured to determine whether the public key ID (20) which is included in the access request (50) is included in the authorized list (110); and
if the authorization module (108) determines that the public key ID (20) is included in the authorized list (110), the authorization module (108) is further configured to grant the associated client device (200) access to the electronic resource (300).

5. The access management system (100) according to claim 4, wherein:
the authorization module (108) is configured to grant the client device (200) access to the electronic resource (300) by encrypting a session key with a public encryption key (22) associated with the client device, to generate an encrypted session key, and sending the encrypted session key to the client device (200), the encrypted session key being decryptable by a client device (200) using a private decryption key which is complementary to the public encryption key (22), and the decrypted session key being usable to access the electronic resource (300) at the resource address, wherein:
the public encryption key (22) is retrieved either from the access request (50) or the registration request (10) received from the client device (200).

6. The access management system (100) according to claim 5, wherein:
the session key is usable by the client device (200) only once in order to access the electronic resource (300); or
the session key is a rotating session key which changes to a new session key after a predetermined period of time; and
when the session key changes, the authorization module (108) is configured to encrypt the new session key with the encryption key (22) of each client device (200) whose public key ID (20) is included in the authorized list (110) in order to generate a new encrypted session key, and to send the new encrypted session key each client device (200).

7. An access management system (100) for controlling access to an electronic resource (300), the electronic resource (300) available at a resource address, and provided by a service provider having associated therewith an electronic provider address (400), the access management system (100) comprising:
a request management module (105) configured to process a plurality of registration requests (10) received at the electronic provider address (400), each of the registration requests (10) including a respective public key ID (20) associated with the client device (200) from which the registration request (10) is received, wherein processing the plurality of registration requests comprises:
selecting only those registration requests (10) of the plurality of registration requests (10) which meet a predetermined validation criterion; and/or
ranking the registration requests (10) based on ranking data contained in the registration request (10) , and selecting one or more of the registration requests (10) based on a selection criterion; and
an authorized user management module (106) configured to add the public key IDs (20) associated with the client devices (200) from which the selected registration requests (10) were received to an authorized list (110),
wherein:
when a public key ID (20) of a client device (200) is on the authorized list (110), that client device (200) is able to access the electronic resource (300).

8. The access management system (100) according to claim 7, wherein:
the access management system (100) further comprises an authorization module (108); and
the request management module (105) or the authorization module (108) is configured to receive a plurality of access requests (50) from a respective plurality of client devices (200), each access request (50) indicating that a respective client device (200) would like to access the electronic resource (300) stored at the resource address and including the public key ID (20) associated with that client device (200);
the authorization module (108) is configured to determine whether a public key ID (20) which is included in each respective access request (50) is included in the authorized list (110); and
if the authorization module (108) determines that a respective public key ID (20) is included in the authorized list (110), the authorization module (108) is further configured to grant the associated client device (200) access to the electronic resource (300).

9. The access management system (100) according to claim 8, wherein:
the authorization module (108) is configured to grant each client device (200) access to the electronic resource (300) by encrypting a session key with a public encryption key (22) associated with the respective client device (200), to generate an encrypted session key, and sending the encrypted session key to the client device (200), the encrypted session key being decryptable by the respective client device (200) using a private decryption key which is complementary to the public encryption key (22), the decrypted session key being usable to access the electronic resource (300) at the resource address, wherein:
the public encryption keys (20) are retrieved either from the access request (50) or the registration request (10) received from the respective client device (200).

10. The access management system (100) according to any one of claims 7 to 9, wherein:
the authorized client management module (106) is configured to place on a waiting list the public key IDs (20) of the client devices (200) whose public key IDs (20) have not been added to the authorized list (110).

11. The access management system according to claim 10, wherein:
the request management module (105) is configured to change the validation criterion, the ranking data and/or the selection criterion;
the request management module (105) is configured to determine whether the registration requests (10) of the client devices (200) whose public key IDs (20) are included in the authorized list (110) meet the updated criteria, and to identify those which do not; and
the request management module (105) is configured to generate instructions configured to cause the authorized client management module (106) to remove from the authorized list (110) the public key IDs (20) associated with the client devices (200) whose registration requests (10) are no longer valid from the authorized list (110).

12. The access management system (100) according to claim 11, wherein:
the request management module (105) is configured to change the validation criterion, the ranking data and/or the selection criterion;
the request management module (105) is configured to determine whether the registration request (10) of client devices (200) who have been placed in the waiting list meet the updated criterion; and
the request management module (105) is configured to generate instructions configured to cause the authorized client management module (106) to add the public key IDs (10) associated with those client devices (200) onto the authorized list (110).

13. The access management system (100) according to any one of claims 1 to 12, wherein:
the electronic provider address (400) is a blockchain address;
the registration request (10) includes a signature generated using a private signature key (14) of the client device (200) from which the registration request (10) is received; and
the public key is a public verification key which is complementary to the private signature key.

14. A computer-implemented method of controlling access to an electronic resource (300), the electronic resource (300) accessible at a resource address, and provided by a service provider having associated therewith an electronic provider address (400), the computer-implemented method comprising:
determining whether a registration request (10) received at the electronic provider address (400) is a valid registration request, the registration request (10) including a public key ID (20) associated with a client device (200) from which the registration request (10) is received; and
if it is determined that the registration request (10) is a valid registration request, adding the public key ID (20) associated with the client device (200) to an authorized list (110), wherein when a public key ID (20) of the user is on the authorized list (110), the client device (200) is permitted to access the electronic resource (300).

15. A computer-implemented method for controlling access to an electronic resource (300), the electronic resource (300) available at a resource address, and provided by a service provider having associated therewith an electronic provider address (400), the computer-implemented method comprising:
processing a plurality of registration requests (100) received at the electronic provider address (400), each of the registration requests (10) including a respective public key ID (20) associated with the client device (200) from which the registration request (10) is received, wherein processing the plurality of registration requests (10) comprises:
selecting only those registration requests (10) of the plurality of registration requests (10) which meet a predetermined validation criterion; and/or
ranking the registration requests (10) based on ranking data contained in the registration request (10), and selecting one or more of the registration requests (10) based on a selection criterion; and
adding the public key IDs (20) associated with the client devices (200) from whom the selected registration requests (10) were received to an authorized list (110),
wherein:
when a public key ID (20) of a client device (200) is on the authorized list (110), that client device (200) is able to access the electronic resource (300).

## Patentansprüche

1. Zugriffsverwaltungssystem (100) zur Steuerung des Zugriffs auf eine elektronische Ressource (300), wobei die elektronische Ressource (300) unter einer Ressourcenadresse zugänglich ist und von einem Dienstanbieter bereitgestellt wird, der damit eine elektronische Anbieteradresse (400) verbunden hat, das Zugriffsverwaltungssystem (100) umfassend:
ein Anforderungsverwaltungsmodul (105), konfiguriert, festzustellen, ob eine an der elektronischen Anbieteradresse (400) empfangene Registrierungsanforderung (10) eine gültige Registrierungsanforderung ist, wobei: die Registrierungsanforderung (10) einen öffentlichen Schlüssel enthält oder den öffentlichen Schlüssel identifizierende Daten (20), welche einem Client-Gerät (200) oder einem Benutzer desselben zugeordnet sind, von dem die Registrierungsanforderung (10) empfangen wird; und
ein Verwaltungsmodul für berechtigte Clients (106), konfiguriert, den öffentlichen Schlüssel des Benutzers oder den öffentlichen Schlüssel identifizierende Daten (20), zu einer Berechtigungsliste (110) hinzufügt, wenn das Anforderungsverwaltungsmodul (105) feststellt, dass die Registrierungsanforderung (10) eine gültige Registrierungsanforderung ist, wobei:
wenn ein öffentlicher Schlüssel oder den öffentlichen Schlüssel identifizierende Daten des Client-Geräts (200), in der Berechtigungsliste (110) enthalten sind, dem Client-Gerät (200) oder dessen Benutzer der Zugriff auf die elektronische Ressource (300) gestattet wird.

2. Zugriffsverwaltungssystem (100) gemäß Anspruch 1, wobei:
das Anforderungsverwaltungsmodul (105) konfiguriert ist, festzustellen, ob die an der elektronischen Anbieteradresse (400) empfangene Registrierungsanforderung (10) ein Validierungskriterium erfüllt, wobei:
wenn das Anforderungsverwaltungsmodul (105) feststellt, dass die an der elektronischen Anbieteradresse (400) empfangene Registrierungsanforderung (10) das Validierungskriterium erfüllt, festgestellt wird, dass die Registrierungsanforderung (10) eine gültige Registrierungsanforderung ist; und
wenn das Anforderungsverwaltungsmodul (105) feststellt, dass die an der elektronischen Anbieteradresse (400) empfangene Registrierungsanforderung (10) das Validierungskriterium nicht erfüllt, wird festgestellt, dass die Registrierungsanforderung (10) keine gültige Registrierungsanforderung ist.

3. Zugriffsverwaltungssystem (100) gemäß Anspruch 1 oder Anspruch 2, wobei:
das Anforderungsverwaltungsmodul (105) konfiguriert ist, festzustellen, ob jede Registrierungsanforderung (10) aus einer Vielzahl von Registrierungsanforderungen (10), die an der elektronischen Anbieteradresse (400) empfangen werden, eine gültige Registrierungsanforderung ist, wobei jede der Registrierungsanforderungen (10) eine jeweilige öffentliche Schlüssel-ID (20) enthält, die dem Client-Gerät (200) zugeordnet ist, von dem die Registrierungsanforderung (10) empfangen wird; und
das Verwaltungsmodul für berechtigte Clients (106) konfiguriert ist, die jeweilige öffentliche Schlüssel-ID (20) des Client-Geräts (200), das mit jeder der gültigen Registrierungsanfragen verbunden ist, zur Berechtigungsliste (110) hinzuzufügen.

4. Zugriffsverwaltungssystem (100) gemäß einem der Ansprüche 1 bis 3, wobei:
das Zugriffsverwaltungssystem (100) ferner ein Autorisierungsmodul (108) umfasst; und
das Anforderungsverwaltungsmodul (105) oder das Autorisierungsmodul (108) konfiguriert ist, eine Zugriffsanforderung (50) von einem Client-Gerät (200) zu empfangen, wobei die Zugriffsanforderung (50) angibt, dass das Client-Gerät auf die elektronische Ressource (300) zugreifen möchte, die unter der Ressourcenadresse gespeichert ist, und die dem Client-Gerät (200), von dem die Zugriffsanforderung (50) empfangen wird, zugeordnete öffentliche Schlüssel-ID (20) enthält;
das Autorisierungsmodul (108) konfiguriert ist, festzustellen, ob die in der Zugriffsanforderung (50) enthaltene öffentliche Schlüssel-ID (20) in der Berechtigungsliste (110) enthalten ist; und
wenn das Autorisierungsmodul (108) feststellt, dass die öffentliche Schlüssel-ID (20) in der Berechtigungsliste (110) enthalten ist, das Autorisierungsmodul (108) ferner konfiguriert ist, dem zugehörigen Client-Gerät (200) Zugriff auf die elektronische Ressource (300) zu gewähren.

5. Zugriffsverwaltungssystem (100) gemäß Anspruch 4, wobei:
das Autorisierungsmodul (108) konfiguriert ist, dem Client-Gerät (200) Zugriff auf die elektronische Ressource (300) zu gewähren, indem es einen Sitzungsschlüssel mit einem dem Client-Gerät zugeordneten öffentlichen Verschlüsselungsschlüssel (22) verschlüsselt, um einen verschlüsselten Sitzungsschlüssel zu erzeugen, und den verschlüsselten Sitzungsschlüssel an das Client-Gerät (200) sendet, wobei der verschlüsselte Sitzungsschlüssel von einem Client-Gerät (200) unter Verwendung eines privaten Entschlüsselungsschlüssels, der zum öffentlichen Verschlüsselungsschlüssel (22) komplementär ist, entschlüsselt werden kann, und der entschlüsselte Sitzungsschlüssel zum Zugriff auf die elektronische Ressource (300) unter der Ressourcenadresse verwendet werden kann, wobei:
der öffentliche Verschlüsselungsschlüssel (22) entweder aus der vom Client-Gerät (200) empfangenen Zugriffsanforderung (50) oder der Registrierungsanforderung (10) abgerufen wird.

6. Zugriffsverwaltungssystem (100) gemäß Anspruch 5, wobei:
der Sitzungsschlüssel vom Client-Gerät (200) nur einmal verwendet werden kann, um auf die elektronische Ressource (300) zuzugreifen; oder
der Sitzungsschlüssel ein rotierender Sitzungsschlüssel ist, der sich nach einer vorbestimmten Zeitspanne in einen neuen Sitzungsschlüssel ändert; und
wenn sich der Sitzungsschlüssel ändert, das Autorisierungsmodul (108) konfiguriert ist, den neuen Sitzungsschlüssel mit dem Verschlüsselungsschlüssel (22) jedes Client-Geräts (200), dessen öffentliche Schlüssel-ID (20) in der Berechtigungsliste (110) enthalten ist, zu verschlüsseln, um einen neuen verschlüsselten Sitzungsschlüssel zu generieren, und den neuen verschlüsselten Sitzungsschlüssel an jedes Client-Gerät (200) zu senden.

7. Zugriffsverwaltungssystem (100) zum Steuern des Zugriffs auf eine elektronische Ressource (300), wobei die elektronische Ressource (300) unter einer Ressourcenadresse verfügbar ist und von einem Dienstanbieter bereitgestellt wird, der damit eine elektronische Anbieteradresse (400) verbunden hat, das Zugriffsverwaltungssystem (100) umfassend:
ein Anforderungsverwaltungsmodul (105), konfiguriert, eine Vielzahl von Registrierungsanforderungen (10) zu bearbeiten, die an der elektronischen Anbieteradresse (400) empfangen werden, wobei jede der Registrierungsanforderungen (10) eine jeweilige öffentliche Schlüssel-ID (20) enthält, die dem Client-Gerät (200) zugeordnet ist, von dem die Registrierungsanforderung (10) empfangen wird, wobei die Bearbeitung der Vielzahl von Registrierungsanforderungen umfasst:
Auswählen nur derjenigen Registrierungsanforderungen (10) aus der Vielzahl von Registrierungsanforderungen (10), die ein vorbestimmtes Validierungskriterium erfüllen; und/oder
Einstufen der Registrierungsanforderungen (10) basierend auf in der Registrierungsanforderung (10) enthaltenen Einstufungsdaten und Auswählen einer oder mehrerer der Registrierungsanforderungen (10) basierend auf einem Auswahlkriterium; und
ein Verwaltungsmodul für berechtigte Clients (106), konfiguriert, die öffentlichen Schlüssel-IDs (20), die den Client-Geräten (200), von denen die ausgewählten Registrierungsanfragen (10) empfangen wurden, zugeordnet sind, zu einer Berechtigungsliste (110) hinzuzufügen,
wobei:
wenn sich eine öffentliche Schlüssel-ID (20) eines Client-Geräts (200) auf der Berechtigungsliste (110) befindet, dieses Client-Gerät (200) in der Lage ist, auf die elektronische Ressource (300) zuzugreifen.

8. Zugriffsverwaltungssystem (100) gemäß Anspruch 7, wobei:
das Zugriffsverwaltungssystem (100) ferner ein Autorisierungsmodul (108) umfasst; und
das Anforderungsverwaltungsmodul (105) oder das Autorisierungsmodul (108) konfiguriert ist, eine Vielzahl von Zugriffsanforderungen (50) von einer jeweiligen Vielzahl von Client-Geräten (200) zu empfangen, wobei jede Zugriffsanforderung (50) angibt, dass ein jeweiliges Client-Gerät (200) auf die unter der Ressourcenadresse gespeicherte elektronische Ressource (300) zugreifen möchte, und die mit diesem Client-Gerät (200) verbundene öffentliche Schlüssel-ID (20) enthält;
das Autorisierungsmodul (108) konfiguriert ist, festzustellen, ob eine öffentliche Schlüssel-ID (20), die in jeder jeweiligen Zugriffsanforderung (50) enthalten ist, in der Berechtigungsliste (110) enthalten ist; und
wenn das Autorisierungsmodul (108) feststellt, dass eine jeweilige öffentliche Schlüssel-ID (20) in der Berechtigungsliste (110) enthalten ist, das Autorisierungsmodul (108) ferner konfiguriert ist, dem zugehörigen Client-Gerät (200) Zugriff auf die elektronische Ressource (300) zu gewähren.

9. Zugriffsverwaltungssystem (100) gemäß Anspruch 8, wobei:
das Autorisierungsmodul (108) konfiguriert ist, jedem Client-Gerät (200) Zugriff auf die elektronische Ressource (300) zu gewähren, indem es einen Sitzungsschlüssel mit einem dem jeweiligen Client-Gerät (200) zugeordneten öffentlichen Verschlüsselungsschlüssel (22) verschlüsselt, um einen verschlüsselten Sitzungsschlüssel zu erzeugen, und den verschlüsselten Sitzungsschlüssel an das Client-Gerät (200) sendet, wobei der verschlüsselte Sitzungsschlüssel durch das jeweilige Client-Gerät (200) unter Verwendung eines privaten Entschlüsselungsschlüssels, der zum öffentlichen Verschlüsselungsschlüssel (22) komplementär ist, entschlüsselt werden kann,
wobei der entschlüsselte Sitzungsschlüssel zum Zugriff auf die elektronische Ressource (300) unter der Ressourcenadresse verwendet werden kann, wobei:
die öffentlichen Verschlüsselungsschlüssel (20) entweder aus der Zugriffsanforderung (50) oder der Registrierungsanforderung (10), die von dem jeweiligen Client-Gerät (200) empfangen wurden, abgerufen werden.

10. Zugriffsverwaltungssystem (100) gemäß einem der Ansprüche 7 bis 9, wobei:
das Verwaltungsmodul für berechtigte Clients (106) konfiguriert ist, die öffentlichen Schlüssel-IDs (20) der Client-Geräte (200), deren öffentliche Schlüssel-IDs (20) nicht der Berechtigungsliste (110) hinzugefügt wurden, auf eine Warteliste zu setzen.

11. Zugriffsverwaltungssystem gemäß Anspruch 10, wobei:
das Anforderungsverwaltungsmodul (105) konfiguriert ist, das Validierungskriterium, die Einstufungsdaten und/oder das Auswahlkriterium zu ändern;
das Anforderungsverwaltungsmodul (105) konfiguriert ist, festzustellen, ob die Registrierungsanforderungen (10) der Client-Geräte (200), deren öffentliche Schlüssel-IDs (20) in der Berechtigungsliste (110) enthalten sind, die aktualisierten Kriterien erfüllen, und diejenigen zu identifizieren, die dies nicht tun; und
das Anforderungsverwaltungsmodul (105) konfiguriert ist, Anweisungen zu generieren, die konfiguriert sind, das Verwaltungsmodul für berechtigte Clients (106) zu veranlassen, die öffentlichen Schlüssel-IDs (20), die mit den Client-Geräten (200) verbunden sind, deren Registrierungsanforderungen (10) nicht mehr gültig sind, aus der Berechtigungsliste (110) zu entfernen.

12. Zugriffsverwaltungssystem (100) gemäß Anspruch 11, wobei:
das Anforderungsverwaltungsmodul (105) konfiguriert ist, das Validierungskriterium, die Einstufungsdaten und/oder das Auswahlkriterium zu ändern;
das Anforderungsverwaltungsmodul (105) konfiguriert ist, festzustellen, ob die Registrierungsanforderung (10) von Client-Geräten (200), die in die Warteliste aufgenommen wurden, das aktualisierte Kriterium erfüllt; und
das Anforderungsverwaltungsmodul (105) konfiguriert ist, Anweisungen zu generieren, die konfiguriert sind, das Verwaltungsmodul für berechtigte Clients (106) zu veranlassen, die öffentlichen Schlüssel-IDs (10), die diesen Client-Geräten (200) zugeordnet sind, zur Berechtigungsliste (110) hinzuzufügen.

13. Zugriffsverwaltungssystem (100) gemäß einem der Ansprüche 1 bis 12, wobei:
die elektronische Anbieteradresse (400) eine Blockchain-Adresse ist;
die Registrierungsanforderung (10) eine Signatur enthält, die unter Verwendung eines privaten Signaturschlüssels (14) des Client-Geräts (200), von dem die Registrierungsanforderung (10) empfangen wurde, erzeugt wurde; und
der öffentliche Schlüssel ein öffentlicher Verifizierungsschlüssel ist, der zum privaten Signaturschlüssel komplementär ist.

14. Computerimplementiertes Verfahren zur Steuerung des Zugriffs auf eine elektronische Ressource (300), wobei die elektronische Ressource (300) unter einer Ressourcenadresse zugänglich ist und von einem Dienstanbieter bereitgestellt wird, der damit eine elektronische Anbieteradresse (400) verbunden hat, das computerimplementierte Verfahren umfassend:
Feststellen, ob eine an der elektronischen Anbieteradresse (400) empfangene Registrierungsanforderung (10) eine gültige Registrierungsanforderung ist, wobei die Registrierungsanforderung (10) eine öffentliche Schlüssel-ID (20) enthält, die einem Client-Gerät (200) zugeordnet ist, von dem die Registrierungsanforderung (10) empfangen wird; und
wenn festgestellt wird, dass die Registrierungsanforderung (10) eine gültige Registrierungsanforderung ist, Hinzufügen der öffentlichen Schlüssel-ID (20), die mit dem Client-Gerät (200) verbunden ist, zu einer Berechtigungsliste (110), wobei, wenn eine öffentliche Schlüssel-ID (20) des Benutzers in der autorisierten Liste (110) enthalten ist, dem Client-Gerät (200) der Zugriff auf die elektronische Ressource (300) gestattet wird.

15. Computerimplementiertes Verfahren zur Steuerung des Zugriffs auf eine elektronische Ressource (300), wobei die elektronische Ressource (300) unter einer Ressourcenadresse verfügbar ist und von einem Dienstanbieter bereitgestellt wird, der damit eine elektronische Anbieteradresse (400) verbunden hat, das computerimplementierte Verfahren umfassend:
Bearbeiten einer Vielzahl von Registrierungsanfragen (100), die an der elektronischen Anbieteradresse (400) empfangen werden, wobei jede der Registrierungsanfragen (10) eine jeweilige öffentliche Schlüssel-ID (20) enthält, die dem Client-Gerät (200) zugeordnet ist, von dem die Registrierungsanfrage (10) empfangen wird, wobei das Bearbeiten der Vielzahl von Registrierungsanfragen (10) umfasst:
Auswählen nur derjenigen Registrierungsanfragen (10) aus der Vielzahl von Registrierungsanfragen (10), die ein vorbestimmtes Validierungskriterium erfüllen; und/oder
Einstufen der Registrierungsanfragen (10) basierend auf in der Registrierungsanfrage (10) enthaltenen Einstufungsdaten und Auswählen einer oder mehrerer der Registrierungsanfragen (10) basierend auf einem Auswahlkriterium; und
Hinzufügen der öffentlichen Schlüssel-IDs (20), die den Client-Geräten (200), von denen die ausgewählten Registrierungsanfragen (10) empfangen wurden, zugeordnet sind, zu einer Berechtigungsliste (110),
wobei:
wenn eine öffentliche Schlüssel-ID (20) eines Client-Geräts (200) in der Berechtigungsliste (110) enthalten ist, dieses Client-Gerät (200) in der Lage ist, auf die elektronische Ressource (300) zuzugreifen.

## Revendications

1. Système de gestion d'accès (100) pour commander l'accès à une ressource électronique (300), la ressource électronique (300) étant accessible à une adresse de ressource et fournie par un fournisseur de services auquel est associée une adresse de fournisseur électronique (400), le système de gestion d'accès (100) comprenant :
un module de gestion de demandes (105), configuré pour déterminer si une demande d'enregistrement (10) reçue à l'adresse de fournisseur électronique (400) est une demande d'enregistrement valide, dans lequel : la demande d'enregistrement (10) inclut une clé publique ou des données (20) identifiant la clé publique, associées à un dispositif client (200) ou à un utilisateur de celui-ci duquel la demande d'enregistrement (10) est reçue ; et
un module de gestion de clients autorisés (106) configuré pour ajouter la clé publique de l'utilisateur, ou les données (20) identifiant la clé publique, à une liste autorisée (110), si le module de gestion de demandes (105) détermine que la demande d'enregistrement (10) est une demande d'enregistrement valide, dans lequel :
lorsqu'une clé publique ou des données identifiant la clé publique du dispositif client (200) figurent sur la liste autorisée (110), le dispositif client (200) ou l'utilisateur de celui-ci est autorisé à accéder à la ressource électronique (300).

2. Système de gestion d'accès (100) selon la revendication 1, dans lequel :
le module de gestion de demandes (105) est configuré pour déterminer si la demande d'enregistrement (10) reçue à l'adresse de fournisseur électronique (400) répond à un critère de validation, dans lequel :
si le module de gestion de demandes (105) détermine que la demande d'enregistrement (10) reçue à l'adresse de fournisseur électronique (400) répond au critère de validation, il est déterminé que la demande d'enregistrement (10) est une demande d'enregistrement valide ; et
si le module de gestion de demandes (105) détermine que la demande d'enregistrement (10) reçue à l'adresse de fournisseur électronique (400) ne répond pas au critère de validation, il est déterminé que la demande d'enregistrement (10) n'est pas une demande d'enregistrement valide.

3. Système de gestion d'accès (100) selon la revendication 1 ou la revendication 2, dans lequel :
le module de gestion de demandes (105) est configuré pour déterminer si chaque demande d'enregistrement (10) parmi une pluralité de demandes d'enregistrement (10) reçues à l'adresse de fournisseur électronique (400) est une demande d'enregistrement valide, chacune des demandes d'enregistrement (10) incluant un identifiant de clé publique respectif (20) associé au dispositif client (200) duquel la demande d'enregistrement (10) est reçue ; et
le module de gestion de clients autorisés (106) est configuré pour ajouter l'identifiant de clé publique respectif (20) du dispositif client (200) associé à chacune des demandes d'enregistrement valides à la liste autorisée (110).

4. Système de gestion d'accès (100) selon l'une quelconque des revendications 1 à 3, dans lequel :
le système de gestion d'accès (100) comprend en outre un module d'autorisation (108) ; et
le module de gestion de demandes (105) ou le module d'autorisation (108) est configuré pour recevoir une demande d'accès (50) provenant d'un dispositif client (200), la demande d'accès (50) indiquant que le dispositif client souhaite accéder à la ressource électronique (300) stockée à l'adresse de ressource et incluant l'identifiant de clé publique (20) associé au dispositif client (200) duquel la demande d'accès (50) est reçue ;
le module d'autorisation (108) est configuré pour déterminer si l'identifiant de clé publique (20) qui est inclus dans la demande d'accès (50) est inclus dans la liste autorisée (110) ; et
si le module d'autorisation (108) détermine que l'identifiant de clé publique (20) est inclus dans la liste autorisée (110), le module d'autorisation (108) est en outre configuré pour accorder au dispositif client associé (200) l'accès à la ressource électronique (300).

5. Système de gestion d'accès (100) selon la revendication 4, dans lequel :
le module d'autorisation (108) est configuré pour accorder au dispositif client (200) l'accès à la ressource électronique (300) en cryptant une clé de session avec une clé de cryptage publique (22) associée au dispositif client, afin de générer une clé de session cryptée, et en envoyant la clé de session cryptée au dispositif client (200), la clé de session cryptée pouvant être décryptée par un dispositif client (200) à l'aide d'une clé de décryptage privée qui est complémentaire de la clé de cryptage publique (22), et la clé de session décryptée pouvant être utilisée pour accéder à la ressource électronique (300) à l'adresse de la ressource, dans lequel :
la clé de cryptage publique (22) est récupérée soit à partir de la demande d'accès (50), soit à partir de la demande d'enregistrement (10) reçue du dispositif client (200).

6. Système de gestion d'accès (100) selon la revendication 5, dans lequel :
la clé de session ne peut être utilisée par le dispositif client (200) qu'une seule fois afin d'accéder à la ressource électronique (300) ; ou
la clé de session est une clé de session tournante qui change pour une nouvelle clé de session après une période de temps prédéterminée ; et
lorsque la clé de session change, le module d'autorisation (108) est configuré pour crypter la nouvelle clé de session avec la clé de cryptage (22) de chaque dispositif client (200) dont l'identifiant de clé publique (20) est inclus dans la liste autorisée (110) afin de générer une nouvelle clé de session cryptée, et pour envoyer la nouvelle clé de session cryptée à chaque dispositif client (200).

7. Système de gestion d'accès (100) pour commander l'accès à une ressource électronique (300), la ressource électronique (300) étant disponible à une adresse de ressource et fournie par un fournisseur de services auquel est associée une adresse de fournisseur électronique (400), le système de gestion d'accès (100) comprenant :
un module de gestion de demandes (105) configuré pour traiter une pluralité de demandes d'enregistrement (10) reçues à l'adresse de fournisseur électronique (400), chacune des demandes d'enregistrement (10) incluant un identifiant de clé publique respectif (20) associé au dispositif client (200) duquel la demande d'enregistrement (10) est reçue, dans lequel le traitement de la pluralité de demandes d'enregistrement consiste à :
sélectionner uniquement les demandes d'enregistrement (10) parmi la pluralité de demandes d'enregistrement (10) qui répondent à un critère de validation prédéterminé ; et/ou
classer les demandes d'enregistrement (10) sur la base de données de classement contenues dans la demande d'enregistrement (10), et sélectionner une ou plusieurs des demandes d'enregistrement (10) sur la base d'un critère de sélection ; et
un module de gestion d'utilisateurs autorisés (106) configuré pour ajouter les identifiants de clé publique (20) associés aux dispositifs clients (200) desquels les demandes d'enregistrement sélectionnées (10) ont été reçues à une liste autorisée (110),
dans lequel :
lorsqu'un identifiant de clé publique (20) d'un dispositif client (200) figure sur la liste autorisée (110), ce dispositif client (200) est en mesure d'accéder à la ressource électronique (300).

8. Système de gestion d'accès (100) selon la revendication 7, dans lequel :
le système de gestion d'accès (100) comprend en outre un module d'autorisation (108) ; et
le module de gestion de demandes (105) ou le module d'autorisation (108) est configuré pour recevoir une pluralité de demandes d'accès (50) provenant d'une pluralité respective de dispositifs clients (200), chaque demande d'accès (50) indiquant qu'un dispositif client respectif (200) souhaite accéder à la ressource électronique (300) stockée à l'adresse de ressource et incluant l'identifiant de clé publique (20) associé à ce dispositif client (200) ;
le module d'autorisation (108) est configuré pour déterminer si un identifiant de clé publique (20) qui est inclus dans chaque demande d'accès respective (50) est inclus dans la liste autorisée (110) ; et
si le module d'autorisation (108) détermine qu'un identifiant de clé publique respectif (20) est inclus dans la liste autorisée (110), le module d'autorisation (108) est en outre configuré pour accorder au dispositif client associé (200) l'accès à la ressource électronique (300).

9. Système de gestion d'accès (100) selon la revendication 8, dans lequel :
le module d'autorisation (108) est configuré pour accorder à chaque dispositif client (200) l'accès à la ressource électronique (300) en cryptant une clé de session avec une clé de cryptage publique (22) associée au dispositif client respectif (200), afin de générer une clé de session cryptée, et en envoyant la clé de session cryptée au dispositif client (200), la clé de session cryptée pouvant être décryptée par le dispositif client respectif (200) à l'aide d'une clé de décryptage privée qui est complémentaire de la clé de cryptage publique (22), la clé de session décryptée pouvant être utilisée pour accéder à la ressource électronique (300) à l'adresse de ressource, dans lequel :
les clés de cryptage publiques (20) sont récupérées soit à partir de la demande d'accès (50), soit à partir de la demande d'enregistrement (10) reçue du dispositif client respectif (200).

10. Système de gestion d'accès (100) selon l'une quelconque des revendications 7 à 9, dans lequel :
le module de gestion de clients autorisés (106) est configuré pour placer sur une liste d'attente les identifiants de clé publique (20) des dispositifs clients (200) dont les identifiants de clé publique (20) n'ont pas été ajoutés à la liste autorisée (110).

11. Système de gestion d'accès selon la revendication 10, dans lequel :
le module de gestion de demandes (105) est configuré pour modifier le critère de validation, les données de classement et/ou le critère de sélection ;
le module de gestion de demandes (105) est configuré pour déterminer si les demandes d'enregistrement (10) des dispositifs clients (200) dont les identifiants de clé publique (20) sont inclus dans la liste autorisée (110) répondent aux critères mis à jour, et pour identifier ceux qui n'y répondent pas ; et
le module de gestion de demandes (105) est configuré pour générer des instructions configurées pour amener le module de gestion de clients autorisés (106) à supprimer de la liste autorisée (110) les identifiants de clé publique (20) associés aux dispositifs clients (200) dont les demandes d'enregistrement (10) ne sont plus valides.

12. Système de gestion d'accès (100) selon la revendication 11, dans lequel :
le module de gestion de demandes (105) est configuré pour modifier le critère de validation, les données de classement et/ou le critère de sélection ;
le module de gestion de demandes (105) est configuré pour déterminer si les demandes d'enregistrement (10) des dispositifs clients (200) qui ont été placés dans la liste d'attente répondent au critère mis à jour ; et
le module de gestion de demandes (105) est configuré pour générer des instructions configurées pour amener le module de gestion de clients autorisés (106) à ajouter les identifiants de clé publique (10) associés à ces dispositifs clients (200) à la liste autorisée (110).

13. Système de gestion d'accès (100) selon l'une quelconque des revendications 1 à 12, dans lequel :
l'adresse de fournisseur électronique (400) est une adresse de chaîne de blocs ;
la demande d'enregistrement (10) inclut une signature générée à l'aide d'une clé de signature privée (14) du dispositif client (200) duquel la demande d'enregistrement (10) est reçue ; et
la clé publique est une clé de vérification publique qui est complémentaire de la clé de signature privée.

14. Procédé mis en œuvre par ordinateur pour commander l'accès à une ressource électronique (300), la ressource électronique (300) étant accessible à une adresse de ressource et fournie par un fournisseur de services auquel est associée une adresse de fournisseur électronique (400), le procédé mis en œuvre par ordinateur consistant à :
déterminer si une demande d'enregistrement (10) reçue à l'adresse de fournisseur électronique (400) est une demande d'enregistrement valide, la demande d'enregistrement (10) incluant un identifiant de clé publique (20) associé à un dispositif client (200) duquel la demande d'enregistrement (10) est reçue ; et
s'il est déterminé que la demande d'enregistrement (10) est une demande d'enregistrement valide, ajouter l'identifiant de clé publique (20) associé au dispositif client (200) à une liste autorisée (110), dans lequel, lorsque l'identifiant de clé publique (20) de l'utilisateur figure sur la liste autorisée (110), le dispositif client (200) est autorisé à accéder à la ressource électronique (300).

15. Procédé mis en œuvre par ordinateur pour commander l'accès à une ressource électronique (300), la ressource électronique (300) étant disponible à une adresse de ressource et fournie par un fournisseur de services auquel est associée une adresse de fournisseur électronique (400), le procédé mis en œuvre par ordinateur consistant à :
traiter une pluralité de demandes d'enregistrement (100) reçues à l'adresse de fournisseur électronique (400), chacune des demandes d'enregistrement (10) incluant un identifiant de clé publique respectif (20) associé au dispositif client (200) duquel la demande d'enregistrement (10) est reçue, dans lequel le traitement de la pluralité de demandes d'enregistrement (10) consiste à :
sélectionner uniquement les demandes d'enregistrement (10) parmi la pluralité de demandes d'enregistrement (10) qui répondent à un critère de validation prédéterminé ; et/ou
classer les demandes d'enregistrement (10) sur la base de données de classement contenues dans la demande d'enregistrement (10), et sélectionner une ou plusieurs des demandes d'enregistrement (10) sur la base d'un critère de sélection ; et
ajouter les identifiants de clé publique (20) associés aux dispositifs clients (200) desquels les demandes d'enregistrement sélectionnées (10) ont été reçues à une liste autorisée (110),
dans lequel :
lorsqu'un identifiant de clé publique (20) d'un dispositif client (200) figure sur la liste autorisée (110), ce dispositif client (200) est en mesure d'accéder à la ressource électronique (300).
